# EUROPEAN PATENT APPLICATION

(11) **EP 1 982 919 A1**
(43) Date of publication of application: **22.10.2008**
(21) Application number: 08007405.7
(22) Date of filing: 15.04.2008
(51) Int. Cl.: B65B 23/14, B65G 47/08, B65G 47/29

(54) **Device for forming groups of products for packaging machines**

(30) Priority: 19.04.2007 IT TO20070274
(71) Applicant: HITECH SYSTEMS S.r.l., I-10040 Leini' (Province of Torino) (IT)
(72) Inventor: Delsanto, Mario, 10040 Leini' (TO) (IT)
(74) Representative: Lotti, Giorgio

(57) **Abstract**

A device (1) for forming groups (2) of products (3) set along a path (P1) a transfer station (S) between an input conveyor (40), designed to feed the products (3) set on their sides and in a continuous row (4), and an output conveyor (50), having a plurality of pockets (51), each designed to receive a respective group (2), the forming device (1) being provided with of two pairs (A,B) of separating elements (10) set on opposite sides of the path (P1) and mobile in the direction of advance of the products (3) for separating the groups (2) from the row (4), feeding the groups (2) to the pockets (51); each pair (A, B) of separating elements (10) having respective movement means with two degrees of freedom for movement of the corresponding separating elements (10) from and to the path (P1) according to respective lines (L) of action inclined by a given angle (α) with respect to a vertical to a plane (P2) of advance of the products (3).

## Description

The present invention relates to a device for forming groups of products for packaging machines.

The present invention finds advantageous application in the construction of a device for forming groups of flat products in general, or biscuits in particular, to which the ensuing treatment will make explicit reference, without this implying any loss of generality.

In general, the biscuits are fed in groups to a packaging machine via a feed line, which extends along a feed path and normally comprises:
- an input conveyor, designed to feed the products set on their sides and in a continuous row up against one another to a transfer station;
- an output conveyor, set along the path P1 downstream of the transfer station and having a plurality of pockets, each designed to receive a respective group; and
- a device for forming groups of products, set in an area corresponding to the transfer station designed to form the groups of products transferring them from the input conveyor to the output conveyor.

Known from the U.S. patent No. 5,893,701 is a device for forming groups of products comprising:
- a plurality of separating knives that are mobile with respect to the input conveyor;
- a chain conveyor, set above the input conveyor for movement of the knives along an annular path having a delivery branch facing the feed path;
- a cam device, associated to the chain conveyor for inserting, at a given instant, a separating knife within the row of products in synchronism with the advance of the row of products themselves and for stopping each knife in a position of accumulation; and
- an air-jet device for separating a last biscuit of each group to favour insertion of the knife.

The forming device described in the U.S. patent referred to above has a relatively complex and likewise far from versatile structure. Furthermore, it also presents the drawback of defining a non-indifferent encumbrance above the input conveyor.

The purpose of the present invention is to provide a device for forming groups of products for packaging machines, which will present a simple and versatile structure and will be free from the drawbacks described above.

According to the present invention, a device is provided for forming groups of products set along a path of advance of the products and in an area corresponding to a transfer station between an input conveyor, designed to feed the products set on their sides and in a continuous row up against one another to the transfer station itself, and an output conveyor, set downstream of the transfer station and having a plurality of pockets, each designed to receive a respective group, the forming device being characterized in that it comprises two pairs of separating elements set on opposite sides of the path of advance and mobile in the direction of advance of the products in constant engagement with the products for separating the groups from the row, feeding the groups to the pockets; each pair of separating elements having respective movement means with two degrees of freedom for movement of the corresponding separating elements along the path of advance from and to the path of advance itself according to respective lines of action inclined by a given angle with respect to a vertical to a plane of advance of the products.

The invention will now be described with reference to the annexed plates of drawings, which illustrate a non-limiting example of embodiment thereof and in which:
- Figure 1 is a schematic view in side elevation of a preferred embodiment of a device for forming groups of products for packaging machines built according to the present invention;

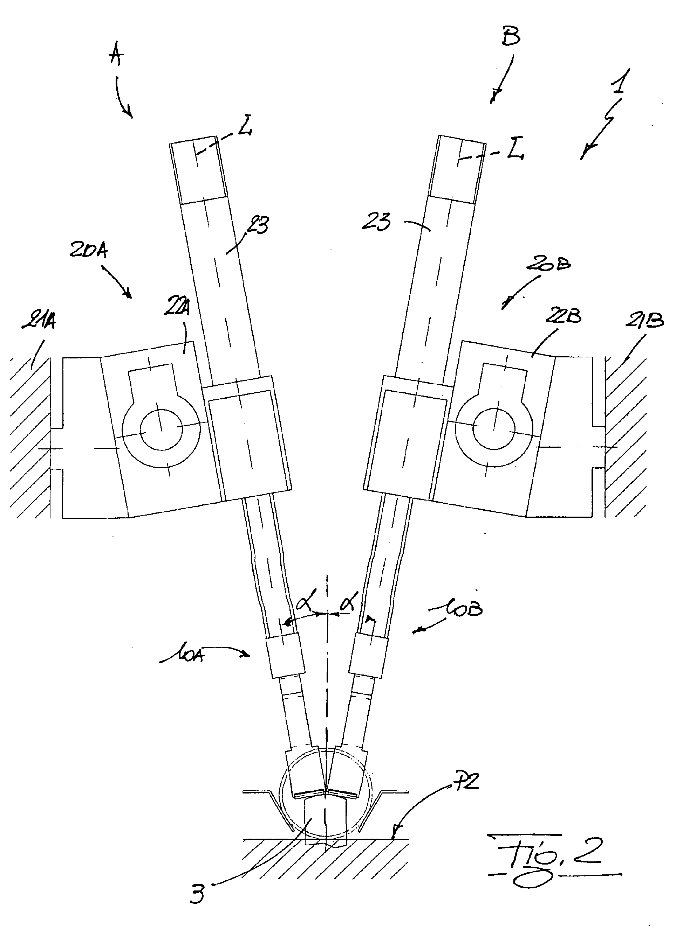

- Figure 2 is a schematic front view of the forming device of Figure 1; and
- Figures 3-13 illustrate, schematically and at a reduced scale, respective steps of operation of the forming device of Figure 1.

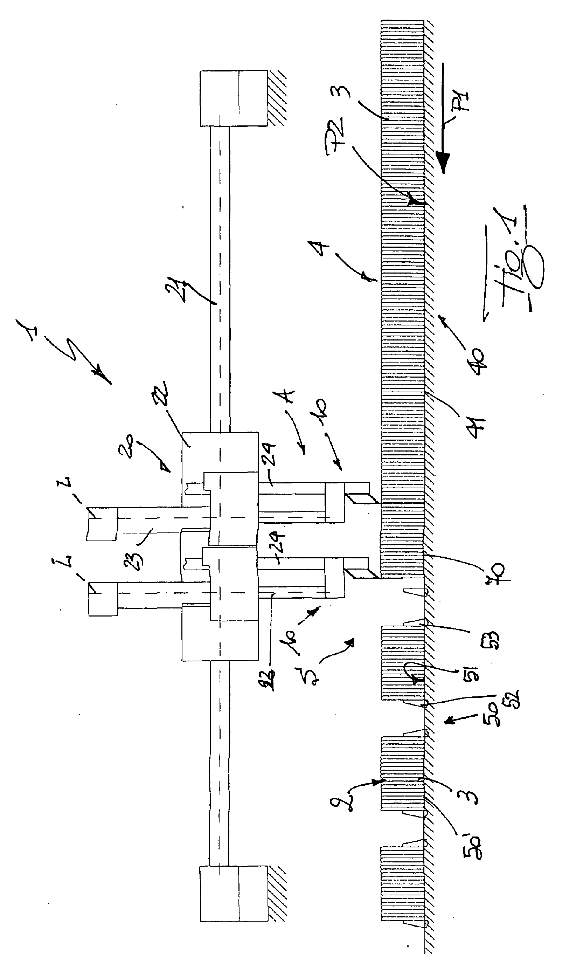

With reference to Figure 1, designated as a whole by 1 is a device for forming groups 2 of products 3 for packaging machines.

The forming device 1 is set along a path P1 of advance of the products in an area corresponding to a transfer station S for transferring the products 3 from an input conveyor 40, along which the products 3 are set on their sides and in a continuous row 4 up against one another, to an output conveyor 50, set downstream of the transfer station S and having a plurality of pockets 51, each designed to receive a respective group 2.

In particular, the conveyor 40 is designed to feed the row 4 of products 3 at a given speed V1 and comprises a conveying branch 41, which extends along the path P1 as far as the station S and defines a plane P2 of advance of the products 3 themselves. Also the conveyor 50 is designed to feed the groups 2 along the path P1 and on the plane P2, but at a speed V2 higher than the speed V1 and comprises a respective conveying branch 50', which extends along the path P1 in a position co-planar to the plane P2 and is connected to the branch 41 for the purposes of a continuity of the plane P2 itself by means of a plate 70 set in an area corresponding to the station S.

The pockets 51 of the conveyor 50 are designed to be filled downstream of the station S at the moment when they receive the groups 2 themselves, and are defined by a front tile 52 and by a rear tile 53, which are fed in succession by the conveyor 50 through the plane P2 in an area corresponding to the station S to assume a position transverse to the plane P2 itself and set at a distance apart equal to the length of a group 2.

The forming device 1 is designed to intercept a given number of products 3 at the end of the row 4 separating them from the row 4 itself to feed them to the conveyor 50 in the form of groups 2, at the same time accelerating the groups 2 from the speed V1 to the speed V2, and comprises two pairs A and B of separating knives 10 mobile along the path P1, and two movement devices 20 with two degrees of freedom for movement of each pair A and B of knives 10 along the path P1 and from and to the path P1 itself.

The devices 20 and the corresponding pair of knives 10 are set on opposite sides of the path P1 above the path P1 itself in positions specular to one another, and have, as will be explained more fully in what follows, the same cycles of operation out of phase with respect to one another.

The knives 10 of each pair A and B are set at a given distance apart from one another along the path P1 equal to an axial length of each group 2 of products 3 and are mobile from and to the path P1 itself independently of one another.

The devices 20 of each pair A and B are identical to one another and each comprise a guide 21 extending along the path P1 of advance both above the conveyor 40 and above the conveyor 50, and a supporting carriage 22, which supports the corresponding knives 10 and is mobile along the corresponding guide 21. Furthermore, each device 20 comprises, for each knife 10, a respective guide 24, fixed to the corresponding carriage 22 and slidably engaged by the corresponding knife 10, and a linear actuator 23, coupled to the corresponding knife 10 for moving the knife 10 itself with reciprocating motion and according to a pre-set cycle along a respective line L of action, which is inclined by an angle α with respect to a vertical passing through the path P1, and intercepts the path P1 itself substantially in an area corresponding to the plane P2.

Each carriage 22 has the possibility of adjusting both the distance along the path P1 between the two corresponding knives 10 and the inclination of the line L of action of the knives 10, consequently enabling both adaptation of the forming device 1 to the formats of the groups 2 and constant freedom of access to the path P1 from above. In particular, moreover, the specular inclination with respect to the path P1 of the knives 10 and the possibility of adjustment of said inclination enable simultaneous actuation of the two devices 20 since the knives 10 of each pair A and B are free to slide along the path P1, without any possibility of banging against the knives 10 of the other pair B and A.

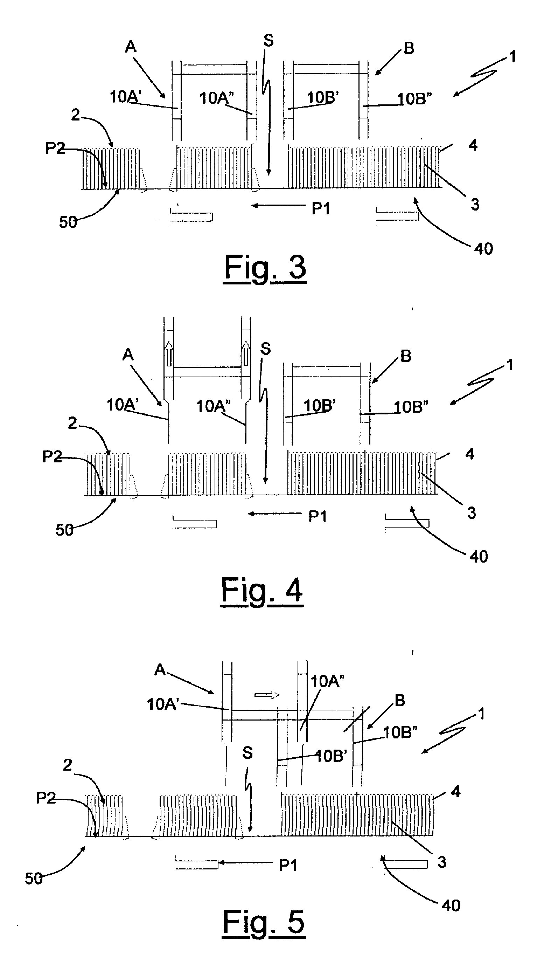

Operation of the forming device 1 will now be described with reference to Figures 3-13 and, for reasons of simplification, the following notation will be adopted:
- the knives 10 and the devices 20 of the pair A and, respectively, of the pair B will be designated by 10A, 10B and 20A and 20B; and
- the knives 10 set towards the station S will be designated by 10A' and 10B', whilst the knives 10 set in a position further away from the station S along the path P1 will be designated by 10A" and 10B".

In particular, operation of the forming device 1 will now be described starting from the configuration illustrated in Figure 1F, i.e., from the instant in which the knives 10 of the device 20A are set within a pocket 51 and move at the speed V2, and the knives 10 of the device 20B are already set through the row 4.

In particular, in Figure 3, the device 20A is set with both of the knives 10A in an area corresponding to a pocket 51 and withholds both at the head and at the tail a group 2 within the pocket 51 itself, causing the knives 10A to advance at the speed V2 along the path P1, whilst the device 20B is set with both of the knives 10B through the row 5 and withholds both at the head and at the tail a group 2, causing the knives 10B to advance at the speed V1 along the path P1.

Next, at the moment when the pocket 51 has been formed, i.e., at the moment when also the tile 53 has been set on the plane P2 of advance of the products 3 and has engaged at the tail a group 2, the knives 10A are raised in unison along the corresponding lines L and, as illustrated in Figure 4, are both disengaged from the group 2. In the meantime, the knives 10B advance once again along the path P1 at the speed V1 together with the row 4 and within the row 4 itself.

Once the knives 10A have disengaged from a group 2, the corresponding device 20A displaces the knives 10A themselves with the corresponding carriage 22 in a direction opposite to that of advance of the products 3: as illustrated in Figures 5, 6 and 7, the knives 10A and the knives 10B will move towards one another up to the point where the knife 10A' will be substantially aligned with the knife 10B".

In an area corresponding to the substantial alignment between the knife 10A' and the knife 10B", the movement of the carriage 22A is reversed and is rendered conformable to that of the carriage 22B to move the knives 10A and 10B in unison along the path P1. Considering the extremely low weight of the devices 20, the forces of inertia involved in the reversal of the motion will not be such as to render necessary a long transient, the duration of which may consequently be substantially neglected.

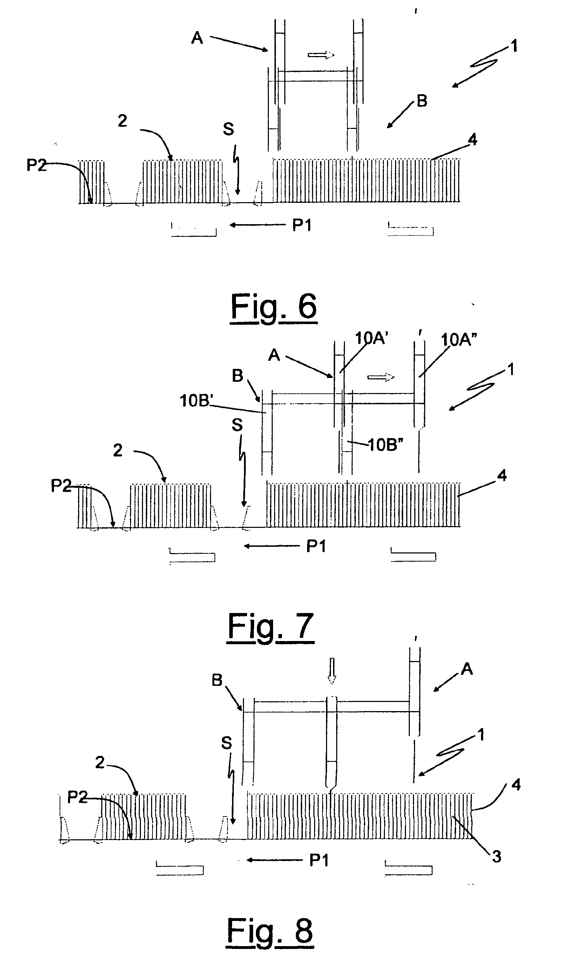

At the moment when the two carriages 22 have the same speed V1 as illustrated in Figure 8, the knife 10A' will be inserted within the row 4, setting itself in an area corresponding to the knife 10B": the insertion of the knife 10A' in the row 4 is facilitated by the presence in the row 4 itself of the knife 10B", thus guaranteeing that the products 3 will remain intact.

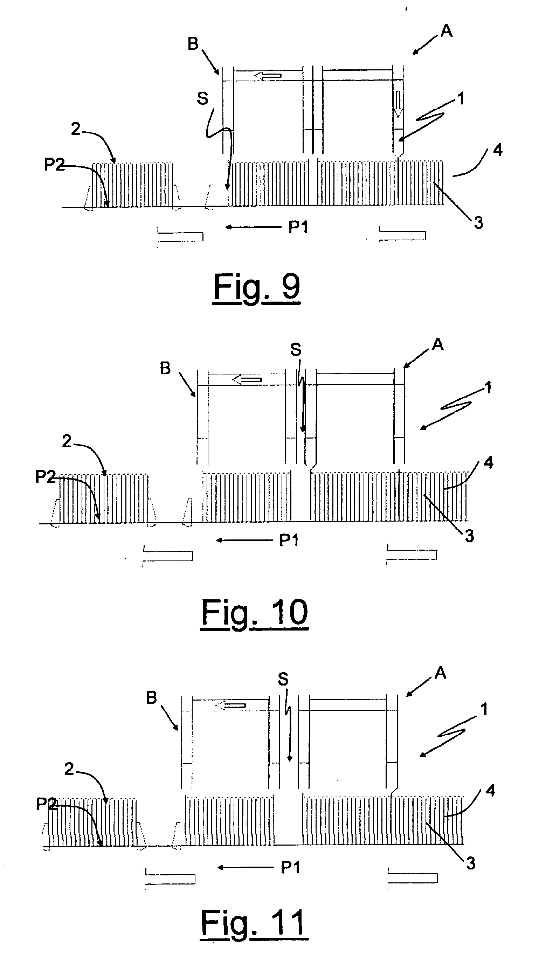

Immediately after, as illustrated in Figure 9, also the knife 10A" is inserted in the row 4, and the carriage 22B is accelerated to detach the group 2 from the row 4 itself. The insertion of the knife 10A" in the row 4 is substantially facilitated both on account of the presence of a roll 11 set in an area corresponding to a tip of the corresponding knife 10 and because the maximum pressure between the products 3 set in the row 4 is exerted at the level of the plane P2.

At the moment when the knives 10B determine separation of a group 2 from the row 4, the stability of the products 3 within the row 4 itself will be guaranteed by the engagement of the knives 10A in the same row 4.

At this point, the carriage 22B is accelerated up to a speed V3 higher than the speed V2 to enable the corresponding knife 10B' to reach a tile 52, as illustrated in Figures 10 and 11, and at the moment when the knife 10B' will be almost up against the tile 52, the carriage 22B is decelerated to the speed V2 to align the knife 10B' with the tile 52, setting the head of the group 2 up against the tile 52 without any impact between the products 3 and the tile 52 itself.

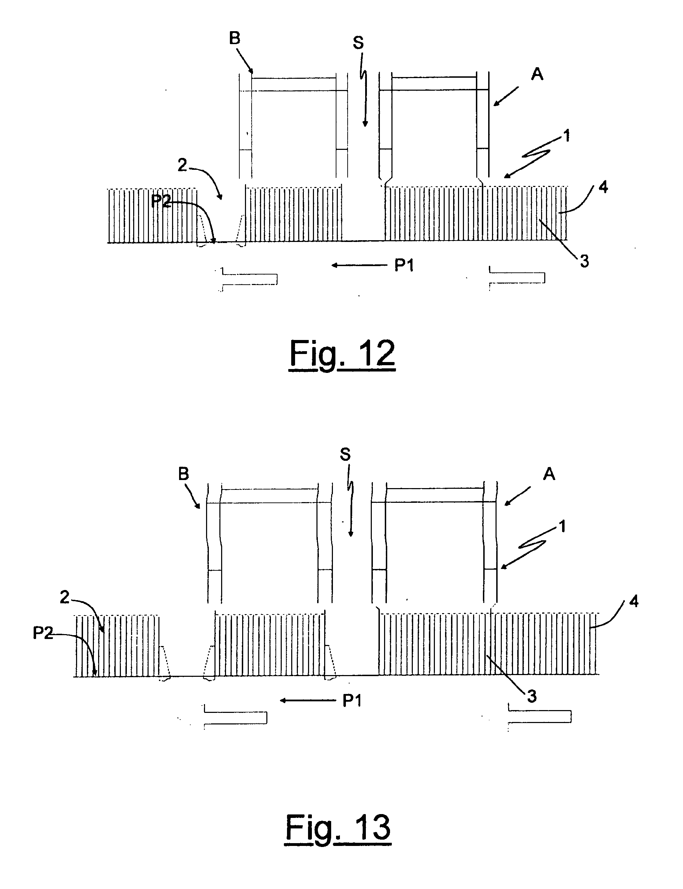

At this point, as illustrated in Figures 12 and 13, the carriage 22B will cause the knives 10B to advance at the speed V2, and the tile 53, traversing the plane P2, will engage at the tail the group 2 concluding a cycle of formation of groups 2.

At the moment when a group 2 is completely enclosed at the head and at the tail by the tiles 52 and 53 of a corresponding pocket 51, the knives 10B may be disengaged from the group 2 itself to start a new cycle of formation.

As may be noted from what has been said above, the fact that the knives 10A and 10b act on the row 4 and on the products 3 on opposite sides of the row 4 itself without interfering with one another enables reduction to a minimum of the cycle times of transfer of a number of groups 2 from the conveyor 40 to the conveyor 50.

It is understood that the invention is not limited to the embodiment described and illustrated herein, which is to be considered as example of embodiment of the device for forming groups of products, which may instead undergo further modifications corresponding to embodiments and arrangements of parts, as well as details of construction and assembly.

## Claims

1. A device (1) for forming groups (2) of products (3), set along a path (P1) of advance of the products (3) and in an area corresponding to a transfer station (S) between an input conveyor (40), designed to feed the products (3) set on their sides and in a continuous row (4) up against one another to the transfer station (S) itself, and an output conveyor (50), set downstream of the transfer station (S) and having a plurality of pockets (51), each designed to receive a respective group (2), the forming device (1) being **characterized in that** it comprises two pairs (A, B) of separating elements (10) set on opposite sides of the path (P1) of advance and mobile in the direction of advance of the products (3) in constant engagement with the products (3) for separating the groups (2) from the row (4), feeding the groups (2) to the pockets (51); each pair (A, B) of separating elements (10) having respective movement means with two degrees of freedom for movement of the corresponding separating elements (10) along the path (P1) of advance from and to the path (P1) of advance itself according to respective lines (L) of action inclined by a given angle (α) with respect to a vertical to a plane (P2) of advance of the products (3).

2. The forming device (1) according to Claim 1, **characterized in that** the separating elements (10) of each pair (A, B) are set at a given distance from one another equal to a length of each group (2) of products (3).

3. The forming device according to Claim 1 or Claim 2, **characterized in that** said movement means (20) have the same cycles of operation out of phase with respect to one another.

4. The forming device according to Claim 1, Claim 2 or Claim 3, **characterized in that** said movement means (20) comprise a respective guide (21) extending along the path (P1) of advance and a respective supporting carriage (22), which supports the corresponding separating elements (10) and is mobile along the corresponding guide (21) itself.

5. The forming device according to Claim 4, **characterized in that** said movement means (20) comprise, for each separating element (10), a respective linear actuator (23), designed to displace the corresponding separating element along the corresponding line (L) of action; the angle (α) of inclination of the line (L) of action of the separating elements (10) of one pair (A)(B) being symmetrical to the angle (α) of inclination of the line (L) of action of the separating elements (10) of the other pair (B)(A).

6. The forming device according to Claim 5, **characterized in that** the guides (21) are set above the path (P1) of advance and on opposite sides of the path (P1) of advance itself, and said movement means (20) are set specularly with respect to one another.

7. The forming device according to Claim 5 or Claim 6, **characterized in that** the separating elements (10) of each pair (A, B) are mobile independently of one another along the corresponding lines (L) of action.
